# NEW EUROPEAN PATENT SPECIFICATION

(11) **EP 1 279 911 B2**
(45) Date of publication and mention of the opposition decision: **23.04.2014**
(45) Mention of the grant of the patent: 12.04.2006
(21) Application number: 01117852.2
(22) Date of filing: 23.07.2001
(51) Int. Cl.: F25B 41/06, B60H 1/32, F16L 9/19

(54) **The use of refrigerant tubing for a vehicle air conditioning system**
Die Verwendung einer Kältemittelrohrleitung für eine Fahrzeugklimaanlage
L'usage de la tuyauterie de frigorigène pour système de climatisation de véhicule

(43) Date of publication of application: 29.01.2003
(60) Divisional application: 06007444.0
(73) Proprietor: Zexel Valeo Climate Control Corporation, Ohsato-gun, Saitama 360-0193 (JP)
(72) Inventor: Hesse, Ullrich, Dr.-Ing., 71634 Ludwigsburg (DE)
(74) Representative: Popp, Eugen

(56) References cited:
- EP-A- 0 459 738
- EP-A- 0 895 012
- EP-A- 0 990 828
- EP-A- 1 020 691
- WO-A1-92/15833
- WO-A2-00/20807
- DE-A- 19 808 893
- GB-A- 838 070
- GB-A- 1 517 757
- US-A- 2 337 862
- US-A- 2 482 171
- US-A- 3 747 632

## Description

The present invention relates to a use of a tubing in carrying the refrigerant in a vehicle air conditioning system, and in particular to a use of a tubing in carrying a CO₂ refrigerant. Such tubing is known from documents EP-A-0 990 828 and EP-A-1 020 691.

Air conditioning systems for automotive vehicles use cold-vapour compression refrigeration cycle wherein a refrigerant is circulated in a closed circuit made up of a compressor, a condenser, an expansion valve and an evaporator. In the evaporator, the refrigerant, which is under low pressure, is evaporated into a gaseous phase. The evaporation lowers the temperature of the air surrounding and passing through the evaporator. Such air may then be blown into the passenger compartment of the vehicle. The compressor sucks the refrigerant from the evaporator, compresses it and passes it to the condenser, where the refrigerant gives up its heat to the environment, and as a result of its increased pressure and loss of heat condenses back to a liquid phase. Finally, the liquid refrigerant is expanded to a lower vaporizing pressure via the expansion valve and returned to the evaporator.

In an automotive vehicle, the compressor is usually driven directly by the vehicle engine and to this end is usually mounted thereon as an ancillary component. The tubing carrying the refrigerant to the various components of refrigeration cycle must therefore be sufficiently flexible to compensate for the relative movement of the engine with respect to these components and to the vehicle chassis.

Traditionally, tetrafluoroethane (R134a) has been used as the refrigerant in automotive air conditioning systems and this has enabled multi-layered tubing typically comprising a nylon diffusion barrier and a fabric-reinforced rubber layer to be used to carry the refrigerant around the refrigeration system. The use of carbon dioxide (CO₂) as a refrigerant is now being investigated widely to replace R134a as the refrigerant in the air conditioning systems of automotive vehicles. However, unlike conventional refrigerants such as R134a, it has a significantly higher vapour pressure and will dissolve or diffuse far more rapidly than R134a in or through elastomers. This ultimately results in the destruction of the elastomer and therefore of any elastomeric tubing carrying the CO₂, particularly upon pressure relief. To date, all attempts at developing a suitable elastomeric tubing for carrying CO₂ have failed. As a result, reinforced, corrugated metal tubing is used. However, this is expensive and transmits noise far more loudly than the elastomeric tubing used for transporting R134a.

To overcome the aforementioned disadvantages, tubing materials incorporating metal foils as a diffusion barrier have been tried. However, these have been unsuccessful because the foils are unable to withstand the mechanical stresses imposed upon them in use and as a result often break or crack with the result that they no longer operate effectively as a diffusion barrier.

The object of the present invention is to provide a use of a flexible tubing for carrying the refrigerant, and in particular a CO₂ refrigerant, in a vehicle air conditioning system which in its basic form is impervious to diffusion and capable of withstanding the mechanical stresses to which it will be subjected to in use and in a more refined form overcomes or substantially mitigates all of the aforementioned disadvantages, in particular that relating to noise.

According to the present invention there is provided a use of a tubing for carrying a refrigerant in a vehicle air conditioning system characterised in that it comprises a flexible bundle of metal capillary tubes.

Each of the capillary tubes has an internal diameter in the range of 1.0 to 4.0 mm inclusive and is preferably made of any one or a combination of copper, steel, brass and aluminum.

In a first embodiment, the bundle of metal capillary tubes are preferably bunched together and may be twisted together to form a cord.

Alternatively, the lengths of metal tubes are laid side by side to form a ribbon.

Since no encasement of an elastic material is used, the bundle or cord is used for heat exchange as e.g. precooling of hot discharge gas.

Reference is made to the accompanying drawings, in which:-
Fig. 1 is a transverse cross-sectional view of a tubing in accordance with background information; and
Fig. 2 is a view similar to that of Fig. 1 but of a second tubing in accordance with background information.

As shown in the drawing, tubing 1 comprises a plurality of metal capillary tubes 2 which are bundled together. Each of the tubes 2 has an internal diameter in the range of 1.0 to 4.0 mm inclusive and owing to their small diameters it has been found that the tubing is sufficiently flexible for use in carrying a refrigerant in a vehicle air conditioning system. In particular the tubing 1 is sufficiently flexible for use in carrying refrigerant around a vehicle engine.

Capillary tubes 2 made of any one or a combination of copper, steel, brass and aluminum are suitable for use in the tubing 1.

The transport characteristics of CO₂ are good and as high pressures must be used when it is employed as a refrigerant, tubing with only a small diameter is required in any event. This means that the capillary tubes 2 in the tubing 1 are particularly suitable for use in transporting a CO₂ refrigerant, the refrigerant mass flow being distributed between each of the individual capillary tubes 2. The pressure loss is then adjusted dependent on the number of capillary tubes 2 used and their diameters. The inherent properties of CO₂ are advantageous in this respect and enable an acceptably low pressure loss to be maintained. It has been found that seven capillary tubes 2 can be sufficient for use in transporting a CO₂ refrigerant for a vehicle air conditioning system but it will be appreciated that the number of tubes 2 forming the tubing may be varied for different applications.

In order to provide protection against corrosion, to improve sound absorption and to increase the stability of the tubing 1, the bundle of tubes 2 is encased in an elastomeric material 3. This casing of elastomeric material 3 does not fall under the scope of the claims. Suitable materials 3 natural or synthetic polymeric materials such as rubber. An intermediate layer (not shown), such as a fabric layer, may be interposed between the bundle of tubes 2 and the casing of elastomeric material 3.

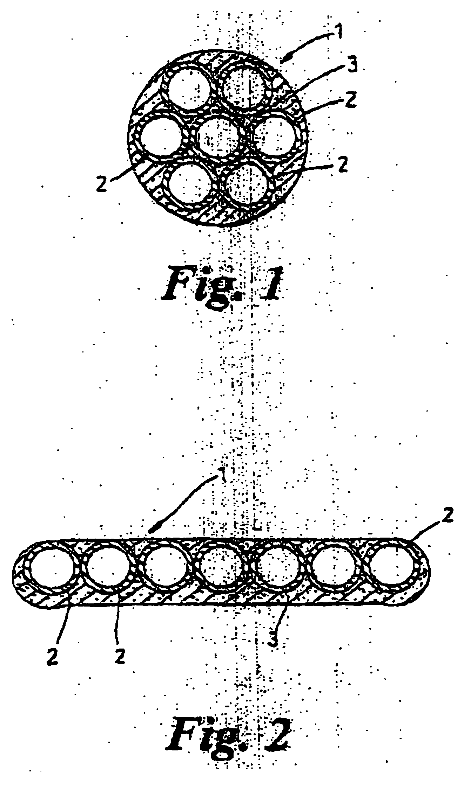

As shown in Fig. 1 with regard to the arrangement of the tubing, the bundle of tubes 2 are preferably bunched together and may be twisted together along their length in the manner of the strands of a cord or rope.

Alternatively, as shown in Fig. 2 with regard to the arrangement of the tubing, the lengths of metal tubes 2 may be laid side by side to form a ribbon. Such an arrangement is particularly advantageous for use in vehicle as the ribbon tubing can be laid, for example, along a vehicle's bodywork in a space saving manner.

Both, the cord or rope and the ribbon can be used to provide additional heat transfer surface, if no elastic embodiment is used. Thus e.g. the need for a large heat exchange surface of the gascooler can be reduced.

## Claims

1. Use of a tubing for carrying a refrigerant in a vehicle air conditioning system wherein the tubing comprises a flexible bundle of metal capillary tubes (2) and each of the capillary tubes (2) has an internal diameter in the range of 1.0-4.0 mm inclusive in a heat exchanger.

2. Use of a tubing as part of the coolant discharging tubing from the compressor of a vehicle air conditioning system in a gas cooler to cool the discharge gas of the compressor, wherein the tubing comprises a flexible bundle of metal capillary tubes (2) and each of the capillary tubes (2) has an internal diameter in the range of 1.0-4.0 mm inclusive.

## Patentansprüche

1. Verwendung einer Rohrleitung zum Transportieren eines Kühlmittels in einer Fahrzeugklimaanlage, wobei die Rohrleitung ein flexibles Metallkapillarrohrbündel (2) umfasst und jedes der Kapillarrohre (2) einen Innendurchmesser im Größenbereich von 1,0 bis einschließlich 4,0 mm hat, in einem Wärmetauscher.

2. Verwendung einer Rohrleitung als Teil der Kühlmittelauslassrohrleitung aus dem Kompressor einer Fahrzeugklimaanlage in einem Gaskühler, um das Abgas des Kompressors zu kühlen, wobei die Rohrleitung ein flexibles Metallkapillarrohrbündel (2) umfasst und jedes der Kapillarrohre (2) einen Innendurchmesser im Größenbereich von 1,0 bis einschließlich 4,0 mm hat.

## Revendications

1. Utilisation d'un tubage pour transporter un fluide frigorigène dans un système de climatisation de véhicule dans laquelle le tubage comprend un faisceau flexible de tubes capillaires métalliques (2) et chacun des tubes capillaires (2) possède un diamètre interne dans la plage de 1,0 à 4,0 mm inclus, dans un échangeur de chaleur.

2. Utilisation d'un tubage en tant que partie du tubage d'évacuation de liquide de refroidissement à partir du compresseur d'un système de climatisation de véhicule dans un refroidisseur de gaz pour refroidir le gaz d'évacuation du compresseur, dans laquelle le tubage comprend un faisceau flexible de tubes capillaires métalliques (2) et chacun des tubes capillaires (2) possède un diamètre interne dans la plage de 1,0 à 4,0 mm inclus.
